**Europäisches Patentamt**

**European Patent Office**

**Office européen des brevets**

(19)

(11) Veröffentlichungsnummer : **0 332 074 B1**

# EUROPÄISCHE PATENTSCHRIFT

(12)

(45) Veröffentlichungstag der Patentschrift :
07.08.91 Patentblatt 91/32

(51) Int. Cl.$^5$ : **F16F 1/26**

(21) Anmeldenummer : **89103746.7**

(22) Anmeldetag : **03.03.89**

(54) Einspannvorrichtung für eine Blattfeder aus Faserverbundwerkstoff.

(30) Priorität : **10.03.88 DE 3807930**

(43) Veröffentlichungstag der Anmeldung :
**13.09.89 Patentblatt 89/37**

(45) Bekanntmachung des Hinweises auf die
Patenterteilung :
**07.08.91 Patentblatt 91/32**

(84) Benannte Vertragsstaaten :
**AT BE DE ES FR GB IT NL SE**

(56) Entgegenhaltungen :
**EP-A- 0 240 676**

(56) Entgegenhaltungen :
DE-A- 3 222 079
PATENT ABSTRACTS OF JAPAN, Band 6, Nr.
193 (M-160)[1071], 2. Oktober 1982; & JP-A-57
101 139 (NIHON HATSUJIYOU K.K.) 23-06-1982
PATENT ABSTRACTS OF JAPAN, Band 8, Nr.
90 (M-292)[1527], 25. April 1984; & JP-A-59 6443
(HINO JIDOSHA KOGYO K.K.) 13-01-1984

(73) Patentinhaber : BASF Aktiengesellschaft
Carl-Bosch-Strasse 38
W-6700 Ludwigshafen (DE)

(72) Erfinder : Schuermann, Helmut
Burgunderstrasse 13
W-6701 Maxdorf (DE)

## Beschreibung

Die Erfindung betrifft eine Einspannvorrichtung für eine Blattfeder aus Faserverbundwerkstoff entsprechend dem Oberbegriff des Patentanspruchs.

Bei nicht-metallischen Blattfedern, beispielsweise Blattfedern aus Faserverbundwerkstoffen wirft deren Befestigung zwischen aufgehängten oder nicht-aufgehängten Bauteilen erhebliche Probleme auf. Ein direktes Verbinden der Federn an den Federaugen oder an der Mitteneinspannung mit Metallanschlußteilen ist nicht möglich, da bei üblicher dynamischer Federbeanspruchung Schädigungen am Faserverbundwerkstoff nicht zu vermeiden wären.

Aus der DE-A-3222079 ist eine Blattfeder mit Endbeschlägen und einer Befestigungsvorrichtung zwischen den Federenden bekannt, bei der zwecks Minderung von Spannungsspitzen Zwischenlagen aus Gummi vorgesehen sind. Derartige Zwischenlagen befriedigen jedoch nicht in jeder Hinsicht. Gummiwerkstoffe ertragen zwar die in Krafteinleitungsbereichen auftretenden hohen Dehnungen und mindern den großen Steifigkeitssprung vom Faserverbundwerkstoff zum Metall, bewirken aber bei Einwirkung oder Aufhebung äußerer Kräfte eine Verzögerung der Einstellung des Gleichgewichtszustandes. Dadurch lockert sich die Klemmverbindung zwischen metallischen Krafteinleitungsteilen und Federkörper. Bei dynamischer Belastung der Blattfeder ergeben sich Verschiebungen zwischen den einzelnen Teilen der Befestigungsvorrichtung und damit nicht kontrollierbare Kraftumlagerungen sowie erhöhter Verschleiß.

Zur Darstellung der Erfindungs-Gattung ist von einer bekannten Einspannvorrichtung im Sinne der EP-A-0240676 ausgegangen, die aus einem die Blattfeder umschließenden und aus zwei gegeneinander nicht verschiebbaren Käfighälften gebildeten Einspannkäfig aus Stahl besteht. Der Federkörper ist dabei an seiner Ober- und Unterseite mit jeweils einer mechanisch steifen Auflage aus glasgewebeverstärktem Kunststoff verbunden, welche mit den Käfighälften in Eingriff stehen. Hierdurch soll eine Relativbewegung in Federlängsrichtung zwischen der Ober- bzw. Unterseite des Federkörpers und dem Einspannkäfig weitgehend vermieden werden. Die formschlüssige Verbindung erfolgt dadurch, daß in den Anpreßflächen der Käfighälften Vertiefungen, Durchbrüche oder Löcher vorgesehen sind, in welche Vorsprünge der Auflagen hineinreichen.

Es war Aufgabe der Erfindung, ein Zwischenbauelement in einer Einspannvorrichtung für eine Blattfeder aus Faserverbundwerkstoff anzugeben, welches den Belastungen aus Anpreßkraft und Reibung standhält und dabei nur sehr gering relaxiert.

Zur Lösung dieser Aufgabe werden die im Kennzeichen des Patentanspruchs angegebenen Maßnahmen vorgeschlagen.

Erfindungsgemäß sind zwischen dem Blattfederkörper und den metallischen Krafteinleitungsteilen Lagerplatten aus mit Kunststoff getränkten oder laminierten Geweben oder Gelegen aus Glas-, Kohlenstoff und/oder Kunststoff-Fasern vorgesehen, wobei die Faserstränge untereinander im wesentlichen gleichmäßig verteilt und gegenüber der Längsachse der Blattfeder unter einem Winkel von ± 45° auf der Zugseite und 0°/90° auf der Druckseite ausgerichtet sind.

Diese Faseranordnung hat praktisch keine nachteiligen Auswirkungen auf den hochbeanspruchten Federkörper, da sie in den beiden auftretenden Verformungsrichtungen, d.h. parallel zur Blattfederlängsachse und infolge Querkontraktion senkrecht dazu, die dehnweichste Möglichkeit darstellt. Durch die eingebetteten Langfasern sowie die Anordnung der Fasern senkrecht zueinander wird die Relaxation und damit ein Lösen der Befestigungseinrichtungen in den Krafteinleitungsbereichen behindert. Außerdem zeichnen sich die Lagerplatten durch hohe Verschleißfestigkeit aus. Sie können in einfacher Weise aus einem Gewebe- oder Gelege-Laminat herausgetrennt werden, wobei darauf zu achten ist, daß in der Einbaulage der Lagerplatten die Faserorientierung zumindest annähernd ± 45° oder 0°/90° bezogen auf die Längsachse der Blattfeder beträgt.

Die Lagerplatten können mit dem Federkörper durch Kleben verbunden werden. Geeignete Kleber sind beispielsweise Epoxid- und Acrylatkleber. Es besteht auch die Möglichkeit, die Platten bei der Fertigung der Blattfeder in das Preßwerkzeug einzulegen und die innige Verbindung Lagerplatte-Blattfeder beim Aushärten des Federwerkstoffs zu erzielen.

Für die Herstellung der Lagerplatten werden Gewebe oder Gelege aus Glas-, Kohlenstoff- und /oder Kunststoff-Fasern mit im wesentlichen gleichmäßiger Faserverteilung verwendet. Bevorzugt werden Kunststoffasern z.B. Aramidfasern. Dabei werden die Gewebe oder Gelege in an sich bekannter Weise mit Kunststoff laminiert, indem z.B. eine Kunststoffschmelze über eine Breitschlitzdüse extrudiert und von beheizten Walzen oder Preßbändern in das Fasermaterial eingedrückt wird. Es ist auch möglich, die Gewebe oder Gelege mit einer dünnflüssigen Kunststofflösung zu tränken und anschließend das Lösungsmittel zu verdampfen oder den Kunststoff im Phasenumkehrverfahren auszufällen. Der Fasergehalt einer Lagerplatte kann in weiten Grenzen variieren und liegt im allgemeinen zwischen 45 und 65 Vgl.%. Die Dicke der Lagerplatte beträgt etwa 1 bis etwa 3 mm.

Als Kunststoffe für das Laminieren oder Tränken der Gewebe oder Gelege eignen sich sowohl härtbare Massen, wie Phenol-, Melamin-, Polyester- oder Epoxidharze als auch thermoplastische Kunststoffe. Bevorzugt werden Thermoplaste verwendet, weil diese zu Lagerplatten mit erhöhter Zähigkeit, d.h. höheren Rißbildungsgrenzen und deutlich verbessertem Verschleißverhalten führen. Als thermoplastische Kunststoffe kommen beispielsweise Olefinpolymerisate, wie Polyethylen oder Polypropylen ; Styrolpolymerisate, wie Polystyrol oder Copolymere des Styrols mit bis zu 50 Gew.% Acrylnitril, α-Methyl-styrol, Maleinsäureanhydrid, Methylmethacrylat, sowie kautschukmodifizierte Styrolpolymerisate, vorzugsweise solche, die 2 bis 25 Gew.% eines Butadienkautschuks enthalten ; Chlor enthaltende Polymerisate, wie Polyvinylchlorid, Polyvinylidenchlorid oder chlorierte Polyolefine ; Polyamide, Polymethylmethacrylat, Polyester aus Terephthalsäure und gesättigten Diolen, Polycarbonat sowie Mischungen dieser Polymerisate in Betracht.

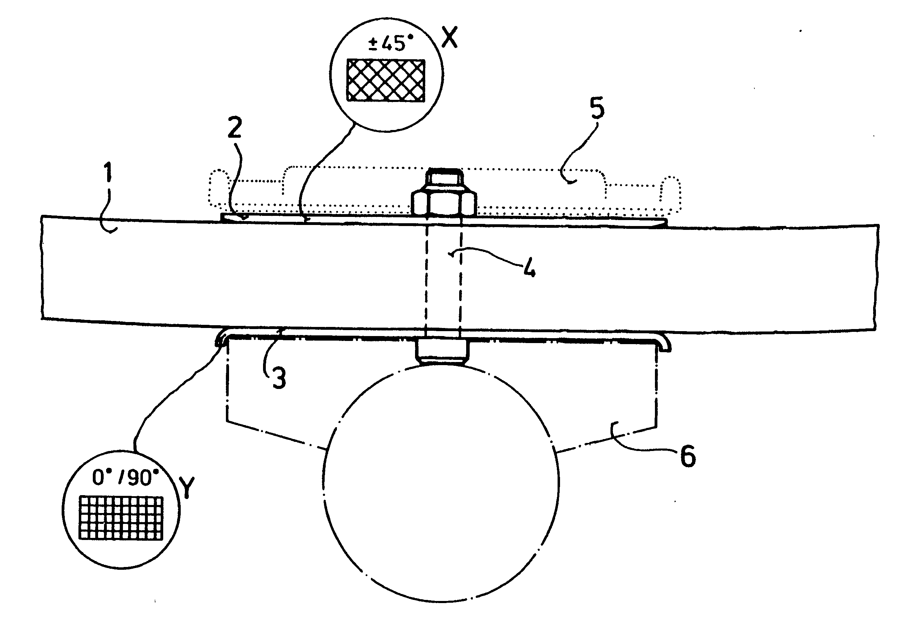

Ein beispielhafter Aufbau für die Mitteneinspannung einer Blattfeder aus Faserverbundwerkstoff ist in der Zeichnung schematisch dargestellt. Darin ist die Blattfeder mit (1) bezeichnet. Oberhalb und unterhalb der Blattfeder sind auf ihr aufliegende Lagerplatten (2) und (3) vorgesehen, deren Breite der Blattfederbreite entspricht. Metallische Krafteinleitungsteile (5) und (6) sind angedeutet. Die aus einem mit Kunststoff laminierten Gewebe bestehenden Lagerplatten sind mittels einer Schraubverbindung (4) mit der Blattfeder verspannt. Die Faserorientierung in den Geweben ist in den Einzelheiten X und Y gezeigt. Die 0°/90°-Anordnung wird auf derjenigen Seite der Feder angebracht, wo aus der Biegebeanspruchung Druckspannungen resultieren. Die ± 45°-Anordnung hingegen ist auf der zugbeanspruchten Seite der Feder anzuordnen.

**Patentansprüche**

1. Einspannvorrichtung für eine Blattfeder aus Faserverbundwerkstoff mit jeweils einem oberhalb und unterhalb des Federkörpers (1) angeordneten metallischen Krafteinleitungsteil (5, 6) sowie einer Lagerplatte (2, 3) aus mit Kunststoff getränkten oder laminierten Geweben oder Gelegen aus Glas-, Kohlenstoff- und/oder Kunststoff-Fasern, dadurch gekennzeichnet, daß gegenüber der Längsachse des Federkörpers (1) die Fasern der Lagerplatte (2) auf der zugbeanspruchten Seite der Blattfeder unter einem Winkel von ± 45° und die Fasern der Lagerplatte (3) auf der druckbeanspruchten Seite der Blattfeder unter einem Winkel von 0° bzw. 90° ausgerichtet sind.

**Claims**

1. A bearing apparatus for a leaf spring, made of a fiber-reinforced material and having a metallic force induction part (5, 6) arranged above and below the spring body (1) and a bearing plate (2, 3) made of woven or laid fabrics consisting of glass fibers, carbon fibers and/or plastics fibers and impregnated or laminated with a plastic, wherein the fibers of the bearing plate (2) on that side of the leaf spring which is under tension are aligned at an angle of ± 45° with respect to the longitudinal axis of the spring body (1) and the fibers of the bearing plate (3) on that side of the leaf spring which is subject to compression are aligned at an angle of 0° or 90° with respect to the longitudinal axis of the spring body (1).

**Revendications**

1. Dispositif de fixation pour un ressort à lame en matériau composite à base de fibres, avec des parties d'introduction de force métalliques (5, 6) disposées respectivement au-dessus et au-dessous du corps de ressort (1), ainsi qu'une plaque d'appui (2, 3) en tissu imprégné de matière plastique ou laminé, ou en couches de fibres de verre, de carbone et/ou de matière synthétique, caractérisé en ce que, par rapport à l'axe longitudinal du corps de ressort (1), les fibres de la plaque d'appui (2), située du côté sollicité en traction du ressort à lame, sont orientées en faisant un angle de ± 45° et les fibres de la plaque d'appui (3), située du côté sollicité en compression, sont orientées suivant un angle de 0°, respectivement 90°.

EP 0 332 074 B1

±45° X

2

5

1

4

0°/90° Y

3

6